# EUROPÄISCHE PATENTANMELDUNG

(11) **EP 2 248 789 A2**
(43) Veröffentlichungstag der Anmeldung: **10.11.2010**
(21) Anmeldenummer: 10161338.8
(22) Anmeldetag: 28.04.2010
(51) Int. Cl.: C04B 40/00

(54) **Reduktion von Cr(VI)-Ionen in Zement oder zementhaltigen Produkten**

(30) Priorität: 07.05.2009 DE 102009002916
(71) Anmelder: Mig Material Innovative Gesellschaft MBH, 33154 Salzkotten (DE)
(72) Erfinder: Brandt, Burkhard Dipl.-Chem. Ing., 33106 Paderborn (DE)
(74) Vertreter: Gulde Hengelhaupt Ziebig & Schneider

(57) **Zusammenfassung**

Die vorliegende Erfindung bezieht sich auf eine Zusammensetzung für die Reduktion von Cr(Vl)-lonen in Zement oder zementhaltigen Produkten, **dadurch gekennzeichnet, dass** die Zusammensetzung enthält: 1 bis 97 Gew.-% eines metallischen Reduktionsmittels, wobei das metallische Reduktionsmittel umfasst oder besteht aus Fe(II)-lonen, Sn(II)-lonen und/oder Sb(III)-lonen und/oder deren Salzen oder einer Mischung davon; 0,5 bis 90 Gew.-% eines organischen Reduktionsmittels, wobei das organische Reduktionsmittel umfasst oder besteht aus: a) Ascorbinsäure, Ascorbat und/oder einem Derivat davon; b) Hydroxypropandial (C₃H₄O₃) und/oder einem Derivat davon; und/oder c) einem reduzierenden Saccharid und/oder einem Derivat davon; oder d) einer Mischung aus a), b) und/oder c); wobei sich die %-Angaben auf das Gesamtgewicht der Zusammensetzung beziehen, sowie deren Verwendung.

## Beschreibung

Die Reduzierung von Chrom(VI) (Chromat, Cr(VI)-Ionen) zu Chrom(III) ist ein wichtiger Bestandteil des Umweltschutzes. Es gibt aus der Patent- und chemischen Literatur mehrere beschriebene Reduktionssysteme zur Cr(VI) - Reduktion und deren Anwendungen. Ein wichtiges Beispiel für den Einsatz von Cr(VI)-Reduktoren ist die Chromallergie, die auf dem Vorhandensein von Cr(VI) z.B. in zementhaltigen Produkten beruhen kann.

Am 17. Januar 2005 trat eine EU-Richtline in Kraft (EU Direktive 2003/53/EC), nach der der Cr(VI)-Gehalt im Zement nicht größer 2 ppm sein darf. Daneben ist jedes zementhaltige Produkt mit einem Haltbarkeitsdatum des Chromatreduktors im Zement zu versehen. Wird die Lagerzeit, d.h. der Grenzwert von 2 ppm Cr(VI) im Zementanteil, überschritten ist der Zement oder das zementhaltige Produkt zu verwerfen. Deshalb ist eine möglichst effiziente Reduktion des Chromatgehalts im Zement von großem ökonomischen Interesse des Zementherstellers bzw. des Verkäufers.

Als Reduktionsmittel zur Reduktion der schädlichen Cr(VI)-Ionen in Zement oder zementhaltigen Produkten werden in EP 0 054 314 und WO 82/02040 Eisen(II)-Ionen haltige Verbindungen vorgeschlagen, insbesondere wird Fe(II)-Sulfat in einer Konzentration von 0,01 bis 10% verwendet. In DE 198 42 300 werden dazu Zinn(II)-Ionen haltige Verbindungen vorgeschlagen, insbesondere werden Sn(II)-Ionen in einer Konzentration von mindestens 0,02% eingesetzt. In EP 1 923 370 werden dagegen Antimon(III)-Ionen haltige Verbindungen offenbart, wobei die Sb(III)-Ionen haltige Verbindung in einer Konzentration von 8x10⁻⁴ bis 8x10⁻¹% pro ppm Cr(VI) angewendet wird, wobei sich die %-Angaben auf das Gesamtgewicht des Zements oder Zementanteils beziehen.

Ein Problem all dieser Formulierungen ist es, dass diese zwar grundsätzlich geeignet sind Cr(VI) zu reduzieren, allerdings besteht ein Bedarf an Formulierungen, die eine noch höhere Reduktionskraft aufweisen.

Aufgabe der Erfindung ist es, einen oder mehrere Nachteile des Standes der Technik zu vermindern oder zu überwinden. Insbesondere ist es eine Aufgabe der Erfindung, Cr(VI)-reduzierende Zusammensetzungen bereitzustellen, die eine erhöhte Reduktionskraft aufweisen und gegebenenfalls die Kosten für den Einsatz von Cr(VI)-Reduktoren verringern.

Die Aufgabe wird gelöst durch Bereitstellung einer Zusammensetzung für die Reduktion von Cr(VI)-Ionen in Zement oder zementhaltigen Produkten, **dadurch gekennzeichnet, dass** die Zusammensetzung enthält:
- 1 - 97 Gew.-%: eines metallischen Reduktionsmittels, wobei das metallische Reduktionsmittel umfasst oder besteht aus Fe(II)-Ionen, Sn(II)- Ionen und/oder Sb(III)-Ionen und/oder deren Salzen oder einer Mischung dieser Ionen und/oder Salze;
- 0,5 - 90 Gew.-%: eines organischen Reduktionsmittels, wobei das organische Reduktionsmittel umfasst oder besteht aus:
a) Ascorbinsäure, Ascorbat und/oder einem Derivat davon;
b) Hydroxypropandial (C₃H₄O₃) und/oder einem Derivat davon; und/oder
c) einem reduzierenden Saccharid und/oder einem Derivat davon; oder
d) einer Mischung aus a), b) und/oder c);
wobei sich die %-Angaben auf das Gesamtgewicht der Zusammensetzung beziehen.

Überraschender Weise wurde gefunden, dass die erfindungsgemäße Zusammensetzung eine deutlich erhöhte Reduktionskraft aufweist als Zusammensetzungen des Standes der Technik, denen das erfindungsgemäße organische Reduktionsmittel fehlt. Es hat sich gezeigt, dass die erfindungsgemäße Zusammensetzung keinen nachteiligen Effekt zum Beispiel auf die Verwendung von damit behandeltem Zement oder zementhaltigem Produkt als Baustoff hat. Es konnte festgestellt werden, dass keine negativen Erscheinungen zum Beispiel in zementhaltigen Produkten auftreten; so treten zum Beispiel insbesondere keine verzögernden Effekte in der Zementmatrix auf.

Zusätzlich wurde gefunden, dass die erfindungsgemäße Zusammensetzung, insbesondere eine Zusammensetzung mit Sn(II)-Ionen, einen Mahlvorgang in der Zementmühle unterstützten kann und dadurch eine Verwendung als Mahlhilfsmittel gegeben ist, welches vor oder während des Mahlvorgangs zugesetzt werden kann.

Die erfindungsgemäße Zusammensetzung eignet sich für die Reduktion von Cr(VI)-Ionen in Zement und/oder zementhaltigen Produkten. Dabei werden unter zementhaltigen Produkten alle Produkte oder Zusammensetzungen verstanden, die Zement enthalten oder daraus bestehen. Bevorzugt enthalten zementhaltige Produkte den Zementanteil als Bindemittel. Insbesondere umfassen zementhaltige Produkte hydraulisch abbindende Massen, wobei der Zementanteil als Bindemittel wirkt, wie beispielsweise Zementleim, Mörtel oder Beton.

Die erfindungsgemäße Zusammensetzung enthält die bekannten Cr(VI)-Reduktoren Fe(II)-Ionen, Sn(II)-Ionen und/oder Sb(III)-Ionen und/oder Salze bzw. Mischungen dieser Ionen und/oder Salze. Dabei liegen diese metallischen Reduktionsmittel in einer Konzentration von 5 bis 97 Gew.-% in der Zusammensetzung vor, wobei sich die %-Angaben auf das Gesamtgewicht der Zusammensetzung beziehen. Bevorzugt enthält die erfindungsgemäße Zusammensetzung die metallischen Reduktionsmittel in einer Konzentration von 5 bis 95 Gew.-%, besonders bevorzugt von 60 bis 95 Gew.-%.

Dabei können die Fe(II)-Ionen, Sn(II)-Ionen und/oder Sb(III)-Ionen grundsätzlich in jeder geeigneten Form eingesetzt werden.

Bevorzugt sind die Fe(II)-Ionen in Form von Salzen enthalten, insbesondere von FeCl₂ und/oder Fe(II)-Sulfat.

Bevorzugt enthält die erfindungsgemäße Zusammensetzung die Sb(III)-Ionen in Form von Salzen, insbesondere von Sb(III)-Tartrat, Sb(III)-Citrat, Sb(III)-Lactat, Sb(III)-Acetat, Sb(III)-Glycolat, Sb(III)-Chlorid, Sb(III)-Carbonat, Sb(III)-Sulfat und/oder Sb(III)-Phosphat. Anstelle der Sb(III)-Salze kann die Zusammensetzung auch Sb(III)-Oxid enthalten.

Bevorzugt enthält die erfindungsgemäße Zusammensetzung die Sn(II)-Ionen in Form von Sn(II)-haltigen Salzen. Insbesondere können SnCl₂ und/oder Sn(II)-Sulfat verwendet werden.

Die erfindungsgemäße Zusammensetzung weist ein organisches Reduktionsmittel auf, wobei das organische Reduktionsmittel a) Ascorbinsäure, Ascorbat und/oder ein Derivat davon; b) Hydroxypropandial (C₃H₄O₃) und/oder ein Derivat davon; und/oder c) ein reduzierendes Saccharid, bevorzugt Fructose und/oder Glucose, und/oder ein Derivat davon umfassen kann oder daraus besteht. Es sind aber auch alle denkbaren Mischungen enthaltend oder bestehend aus a), b) und/oder c) möglich. Das organische Reduktionsmittel liegt in der Zusammensetzung in einer Konzentration von 2,5 bis 90 Gew.-% vor, wobei sich die %-Angaben auf das Gesamtgewicht der Zusammensetzung beziehen. Bevorzugt weist die erfindungsgemäße Zusammensetzung einen Gehalt von 3 bis 90 Gew.-% organisches Reduktionsmittel auf, besonders bevorzugt von 3 bis 40 Gew.-%.

Bevorzugt enthält oder besteht das organische Reduktionsmittel der erfindungsgemäßen Zusammensetzung aus Ascorbinsäure, Ascorbat und/oder ein Derivat davon.

Das Reduktionsmittel der erfindungsgemäßen Zusammensetzung kann bevorzugt Hydroxypropandial (C₃H₄O₃) und/oder einem Derivat davon enthalten oder daraus bestehen.

In einer weiteren bevorzugten Ausführungsform der erfindungsgemäßen Zusammensetzung umfasst oder besteht das organische Reduktionsmittel aus einem oder mehreren verschiedenen reduzierenden Sacchariden und/oder deren Derivaten. Bei den reduzierenden Sacchariden kann es sich insbesondere um solche Saccharide handeln, die sich unter alkalischen Bedingungen durch reduzierende Eigenschaften auszeichnen. Besonders bevorzugt handelt es sich bei dem oder den reduzierenden Saccharid(en) um Fructose und/oder Glucose.

Als Derivate werden erfindungsgemäß insbesondere die Salze der oben genannten organischen Reduktionsmittel verstanden. In den eingesetzten Reduktionsmitteln muss die Endiol-Form mit der benachbarten Carbonylgruppe erhalten sein. Andere OH-Gruppen der genannten Reduktionsmittel können teilweise oder vollständig verestert sein. Als Derivate der organischen Reduktionsmittel werden erfindungsgemäß also insbesondere deren Salze und/oder Ester verstanden.

Die erfindungsgemäße Zusammensetzung kann grundsätzlich in jeder geeigneten Form vorliegen. Die Form der Zusammensetzung kann auch in Abhängigkeit der angestrebten Verwendung gewählt werden. Bevorzugt liegt die erfindungsgemäße Zusammensetzung in flüssiger, fester Form, z.B. als Pulver, oder als Suspension vor.

Die Dosierung der erfindungsgemäßen Zusammensetzung zur dauerhaften Senkung des Cr(VI)-Gehalts, bevorzugt unter einen Gehalt von 2 ppm Cr(VI), wird in Abhängigkeit vom Ausgangsgehalt an Cr(VI) im zu behandelnden Zement oder zementhaltigen Produkt gewählt.

Um einen besonders ausgeprägten Effekt auf die Reduktionskraft und gegebenenfalls auf eine Verlängerung des Lagerzeitraums der behandelten Zemente oder zementhaltigen Produkte zu erhalten, wird die erfindungsgemäße Zusammensetzung derart eingesetzt und dosiert, dass die Sn(II)-Ionen und/oder die Fe(II)-Ionen und/oder Sb(III)-Ionen mindestens in einer bestimmten Konzentration pro zu reduzierendem ppm Cr(VI) im behandelten Zement oder Zementanteil des zementhaltigen Produkts vorliegen.

Dabei liegen die Sn(II)-Ionen im behandelten Zement oder zementhaltigen Produkt bevorzugt in einer Konzentration pro zu reduzierendem ppm Cr(VI) vor von mindestens 2x10⁻⁴% bezogen auf das Gesamtgewicht des Zementanteils, bevorzugt von mindestens 3x10⁻⁴%, besonders bevorzugt von 2x10⁻⁴% bis 1x10⁻¹%, ganz besonders bevorzugt von 3x10⁻³% bis 5x10⁻¹%.

Die Fe(II)-Ionen und/oder Sb(III)-Ionen liegen im behandelten Zement oder zementhaltigen Produkt bevorzugt in einer Konzentration pro zu reduzierendem ppm Cr(VI) vor von mindestens 2x10⁻⁵% bezogen auf das Gesamtgewicht des Zementanteils, bevorzugt von mindestens 2x10⁻⁴%, besonders bevorzugt von 2x10-4% bis 1,5x10⁻²%, ganz besonders bevorzugt von 2x10⁻⁴% bis 1x10⁻¹%.

Bevorzugt kann die Dosierung anhand nachstehender Zusammenstellung erfolgen:

| Cr(VI)-Gehalt im Zementanteil in ppm | Erfindungsgemäße Zusammensetzung in Gewichts-% bezogen auf den Zementanteil |
|---|---|
| 5 | ≤ 0,1 |
| 10 | ≤ 0,2 |
| 18 | ≤ 0,38 |
| 22 | ≤ 0,45 |

Die erfindungsgemäße Zusammensetzung kann verwendet werden zur Herstellung von Zement oder zementhaltigen Produkten, insbesondere von lagerstabilem Zement oder lagerstabilen zementhaltigen Produkten. Bevorzugt wird die erfindungsgemäße Zusammensetzung zur Herstellung von Zement oder zementhaltiger Produkte verwendet, deren Zementanteil nicht mehr als 2 ppm Cr(VI) aufweist. Besonders bevorzugt kann die erfindungsgemäße Zusammensetzung zur Herstellung von Zement oder zementhaltiger Produkte verwendet werden, deren Zementanteil für einen Lagerzeitraum von 6 Monaten nicht mehr als 2 ppm Cr(VI) aufweist.

Die erfindungsgemäße Zusammensetzung kann zusätzlich ein oder mehrere Additive enthalten. Bei den Additiven kann es sich insbesondere um solche Additive handeln, die üblicherweise bei der Herstellung, Lagerung und/oder Verwendung von Zement oder zementhaltigen Produkten eingesetzt werden. Bevorzugt handelt es sich bei den Additiven um Betonverflüssiger, Fließmittel, Stabilisierer, Luftporenbildner, Erstarrungsbeschleuniger, Erhärtungsbeschleuniger, Verzögerer, Dichtungsmittel, Einpresshilfen, Spritzbetonbeschleuniger, Sedimentationsreduzierer, Low Water Binder, Schwindreduzierer, Mahlhilfsmittel, Gips, Hüttensand, Kalkstein, Zeolithe und/oder Phonolithe sowie um Mischungen davon. In diesem Zusammenhang wurde festgestellt, dass die erfindungsgemäße Zusammensetzung mit den genannten Additiven kombiniert werden kann ohne das Wechselwirkungen wie z.B. Ausfällungen etc. erhalten werden, wobei die Funktionsfähigkeit als Cr(VI)-Reduktor nicht eingeschränkt ist.

Bevorzugt enthält die erfindungsgemäße Zusammensetzung 0 bis 90 Gew.-% Phonolit, besonders bevorzugt 0,1 bis 45 Gew.-% Phonolit, ganz besonders bevorzugt 2 bis 40 Gew.-% Phonolit, wobei sich die %-Angaben auf das Gesamtgewicht der Zusammensetzung beziehen.

Die vorliegende Erfindung bezieht sich auch auf ein Verfahren zur Reduktion von Cr(VI) in Zement oder zementhaltigen Produkten. Das erfindungsgemäße Verfahren zeichnet sich dadurch aus, dass der Zement oder die zementhaltigen Produkte mit einer erfindungsgemäßen Zusammensetzung derart gemischt werden, so dass in der Mischung die Konzentration an Fe(II)- und/oder Sn(II)- und/oder Sb(II)-Ionen mindestens 2x10⁻⁶% pro zu reduzierendes ppm Cr(VI) beträgt, bevorzugt mindestens 2x10⁻⁵% pro zu reduzierendes ppm Cr(VI), wobei sich die %-Angaben jeweils auf das Gewicht des Zementanteils beziehen. Besonders bevorzugt beträgt die Konzentration an Fe(II)- und/oder Sn(II)- und/oder Sb(II)-Ionen 2x10⁻⁵% bis 1,5x10-¹% pro zu reduzierendem ppm Cr(VI) oder insbesondere 2x10⁻⁵% bis 1x10⁻¹% pro zu reduzierendem ppm Cr(VI). Die Beimischung der erfindungsgemäßen Zusammensetzung kann vor, während und/oder nach dem Mahlen des Zements oder der zementhaltigen Produkte erfolgen.

Gegenstand der vorliegenden Erfindung ist auch die Verwendung von Ascorbinsäure, Ascorbat, Hydroxypropandiol und/oder einem reduzierenden Sacharid und/oder Derivaten davon als Reduktionsverstärker für Fe(II)-Verbindungen, Sb(III)-Verbindungen und/oder Sn(II)-Verbindungen, insbesondere Sn(II)-Verbindungen. Die erfindungsgemäßen organischen Reduktionsmittel werden insbesondere bei der Reduktion von Cr(VI)-Ionen in Zement oder zementhaltigen Produkten als Reduktionsverstärker für Sn(II)-, Fe(II) und/oder Sb(III)-Verbindungen verwendet.

Es wurde überraschender Weise gefunden, dass die genannten organischen Reduktionsmittel insbesondere in Kombination mit Sn(II)-Ionen eine starke Reduktion im alkalischen Milieu erlauben.

Die vorliegende Erfindung bezieht sich auch auf:
- einen Reduktionsverstärker für Zinn-II-Verbindungen, **dadurch gekennzeichnet, dass** er Ascorbate bzw. deren Derivate und /oder Ascorbinsäure und deren Derivate und /oder Hydroxypropandial bzw. deren Derivate und /oder reduzierende Sacharide bzw. deren Derivate enthält,
- einen erfindungsgemäßen Reduktionsverstärker, der dadurch gekennzeichnet ist, dass Ascorbate, Ascorbinsäure bzw. deren Derivate nach der allgemeinen Formel (1) enthalten sind,
- einen erfindungsgemäßen Reduktionsverstärker, der dadurch gekennzeichnet ist, dass Ascorbinsäure bzw. deren Derivate nach der allgemeinen Formel (1) enthalten sind,
- einen erfindungsgemäßen Reduktionsverstärker, der dadurch gekennzeichnet ist, dass Hydroxypropandial bzw. deren Derivate nach der Standard- bzw. allgemeinen Formel (1) enthalten sind,
- einen erfindungsgemäßen Reduktionsverstärker, der dadurch gekennzeichnet ist, dass Hydroxypropandial, das aus einer alkalischen Lösung von D( +) - Glucose erzeugt wird, enthalten ist,
- einen erfindungsgemäßen Reduktionsverstärker, der dadurch gekennzeichnet ist, dass Fructose oder reduzierende Saccharide unter alkalischen Bedingungen enthalten sind,
- einen erfindungsgemäßen Reduktionsverstärker, der dadurch gekennzeichnet ist, dass der Reduktionsverstärker zusätzlich ein oder mehrere Additive enthält, bevorzugt handelt es sich bei den Additiven um Betonverflüssiger, Fließmittel, Stabilisierer, Luftporenbildner, Erstarrungsbeschleuniger, Erhärtungsbeschleuniger, Verzögerer, Dichtungsmittel, Einpresshilfen, Spritzbetonbeschleuniger, Sedimentationsreduzierer, Low Water Binder, Schwindreduzierer, Mahlhilfsmittel, Gips, Hüttensand, Kalkstein, Zeolithe und/oder Phonolithe sowie um Mischungen davon,
- eine Verwendung des erfindungsgemäßen Reduktionsverstärkers für Zinn-II, Einsen-II- und/oder Antimon-III-Verbindungen.

Allgemein lässt sich folgende Formel zur Herstellung von erfindungsgemäßen Reduktionsverstärkern aufstellen:
Formel I:
   5 - 97 Gew.-% Zinn-II-Verbindungen + 2,5 - 90 Gew.-% A, B, C, A+B, B+C, A+C oder A+B+C + 0 - 50 Gew.-% Phonolit
      wobei
   A = Ascorbat und deren Derivate bzw. Ascorbinsäure und deren Derivate
   B = Hydroxypropandial und deren Derivate
   C = alkalische Fructose und deren Derivate bzw. entsprechende Saccharide
      sind.

Dazwischen ist jede Mischung möglich.

Die vorstehende Erfindung lässt sich ebenso bei Eisen-II- und Antimon-III-Verbindungen anwenden.

Im Folgenden wird die Erfindung anhand von Ausführungsbeispielen verdeutlicht.

### Beispiele:

In den hier gezeigten Versuchen wird eine Modellmischung eingesetzt, bestehend aus 100 g Zement + 400 g Wasser, mit 16 ppm Chromat. Die Bestimmung der nachfolgenden Chromatgehalte wurde nach der Europäischen Standardmethode EN 196-10 vorgenommen.

### Versuch 1: Vergleichsversuch ohne erfindungsagemäße Zusammensetzung

Der Modellmischung wurde 60,3 mg reines Zinn-II-Sulfat zugesetzt. Nach erfolgter Reduktion wies dieses Zementsystem einen Chromatwert von 3,7 ppm auf.

### Versuch 2: Versuch mit erfindungsgemäßer Zusammensetzung

Der Modellmischung wurden 60,3 mg einer Mischung aus 95 Gew.-% Zinn-II-Sulfat und 5 Gew.-% Ascorbat ( bzw. Ascorbinsäure ) zugesetzt. Nach erfolgter Reduktion wies dieses Zementsystem einen Chromatwert von nur 0,9 ppm auf.

### Versuch 3: Vergleichsversuch ohne erfindungsgemäße Zusammensetzung

Der Modellmischung wurden 60,3 mg einer Mischung mit 60 Gew.-% Zinn-II-Sulfat zugesetzt. Nach erfolgter Reduktion wies dieses Zementsystem einen Chromatwert von 9,3 ppm auf.

### Versuch 4: Versuch mit erfindungsgemäßer Zusammensetzung

Der Modellmischung wurden 60.3 mg einer erfindungsgemäßen Zusammensetzungen mit 60 Gew.-% Zinn-II-Sulfat + 5 Gew.-% Ascorbat bzw. Ascorbinsäure zugesetzt. Nach erfolgter Reduktion wies dieses Zementsystem einen Chromatwert von nur 5 ppm auf.

### Versuch 5: Versuch mit erfindungsgemäßer Zusammensetzung

Der Modellmischung wurden 60.3 mg einer erfindungsgemäßen Zusammensetzungen mit 80 Gew.-% Zinn-II-Sulfat und 3 Gew.-% Ascorbat bzw. Ascorbinsäure zugesetzt. Nach erfolgter Reduktion wies dieses Zementsystem einen Chromatwert von nur 1,0 ppm auf.

In weiteren Versuchen konnte gezeigt werden, dass folgende Standardrezepturen der erfindungsgemäßen Zusammensetzung zu einem verbesserten Ergebnis des Chromatwertes führten:
Standardrezeptur 1: 80 Gew.-% Zinn-II-Sulfat, 3 Gew.-% Ascorbat bzw. Ascorbinsäure und 17 Gew.-% Phonolit.
Standardrezeptur 2: 60 Gew.-% Zinn-II-Sulfat, 5 Gew.-% Ascorbat bzw. Ascorbinsäure und 35 Gew.-% Phonolit.

Es konnte gezeigt werden, dass die Dosis-Variationen zwischen Zinn-II-Verbindung zu Ascorbat eine Bandbreite von 5% Zinn-II-Verbindung zu Ascorbat 95% bzw. umgekehrt möglich ist und immer eine erfindungsgemäße Zusammensetzung erhalten wird, die zu einer signifikanten Erhöhung der Reduktionskraft führt.

Weitere Untersuchungen zeigten, dass besonders die Umsetzung von reduzierenden Sacchariden in alkalischer Lösung einen vergleichbar günstigen Effekt zusammen mit Zinn-II-Verbindungen hervorruft.

Es konnte gezeigt werden, dass in der obig beschriebenen Zementlösung mit 16 ppm Chromat durch folgende Rezepturen ein Chromatwert von ca. 1 ppm Chromat erhalten werden konnte.
- Standardrezeptur 3:: 80 Gew.-% Zinn-II-Sulfat, 4,5 Gew.-% Hydroxypropandial und 15,5 Gew.-% Phonolith.
- Standardrezeptur 4:: 60 Gew.-% Zinn-II-Sulfat, 12 Gew.-% Hydroxypropandial und 28 Gew.-% Phonolit.

## Patentansprüche

1. Zusammensetzung für die Reduktion von Cr(VI)-Ionen in Zement oder zementhaltigen Produkten, **dadurch gekennzeichnet, dass** die Zusammensetzung enthält:
1 - 97 Gew.-% eines metallischen Reduktionsmittels, wobei das metallische Reduktionsmittel umfasst oder besteht aus Fe(II)-Ionen, Sn(II)-Ionen und/oder Sb(III)-Ionen und/oder deren Salzen oder einer Mischung dieser Ionen und/oder Salze;
0,5 - 90 Gew.-% eines organischen Reduktionsmittels, wobei das organische Reduktionsmittel umfasst oder besteht aus:
a) Ascorbinsäure, Ascorbat und/oder einem Derivat davon;
b) Hydroxypropandial und/oder einem Derivat davon; und/oder
c) einem reduzierenden Saccharid und/oder einem Derivat davon; oder
d) einer Mischung aus a), b) und/oder c);
wobei sich die %-Angaben auf das Gesamtgewicht der Zusammensetzung beziehen.

2. Zusammensetzung nach Anspruch 1, **dadurch gekennzeichnet, dass** die Zusammensetzung 0 bis 90 Gew.-%, vorzugsweise 0,1 bis 45 Gew.-%, Phonolit enthält, wobei sich die %-Angaben auf das Gesamtgewicht der Zusammensetzung beziehen.

3. Zusammensetzung nach einem der Ansprüche 1 oder 2, **dadurch gekennzeichnet, dass** die Zusammensetzung das metallische Reduktionsmittel in einer Menge von 5 bis 95 Gew.-% enthält, bevorzugt von 60 bis 95 Gew.-%, wobei sich die %-Angaben auf das Gesamtgewicht der Zusammensetzung beziehen.

4. Zusammensetzung nach einem der vorhergehenden Ansprüche, **dadurch gekennzeichnet, dass** die Zusammensetzung das organische Reduktionsmittel in einer Menge von 3 bis 90 Gew.-% enthält, bevorzugt 3 bis 40 Gew.-%, wobei sich die %-Angaben auf das Gesamtgewicht der Zusammensetzung beziehen.

5. Zusammensetzung nach einem der vorhergehenden Ansprüche, **dadurch gekennzeichnet, dass** das metallische Reduktionsmittel Sn(II)-Ionen und/oder ein Salz davon enthält oder daraus besteht.

6. Zusammensetzung nach einem der vorhergehenden Ansprüche, **dadurch gekennzeichnet, dass** das organische Reduktionsmittel Ascorbinsäure, Ascorbat und/oder ein Derivat davon enthält oder daraus besteht.

7. Zusammensetzung nach einem der Ansprüche 1 bis 5, **dadurch gekennzeichnet, dass** das organische Reduktionsmittel Hydroxypropandial und/oder ein Derivat davon enthält oder daraus besteht.

8. Zusammensetzung nach einem der Ansprüche 1 bis 5, **dadurch gekennzeichnet, dass** das organische Reduktionsmittel ein reduzierendes Saccharid und/oder ein Derivat davon enthält oder daraus besteht, bevorzugt Fructose und/oder Glucose.

9. Zusammensetzung nach einem der vorhergehenden Ansprüche, **dadurch gekennzeichnet, dass** die Zusammensetzung zusätzlich ein oder mehrere Additive enthält, bevorzugt Betonverflüssiger, Fließmittel, Stabilisierer, Luftporenbildner, Erstarrungsbeschleuniger, Erhärtungsbeschleuniger, Verzögerer, Dichtungsmittel, Einpresshilfen, Spritzbetonbeschleuniger, Sedimentationsreduzierer, Low Water Binder, Schwindreduzierer, Mahlhilfsmittel, Gips, Hüttensand, Kalkstein, Zeolithe und/oder Phonolithe oder Mischungen davon.

10. Verwendung einer Zusammensetzung nach einem der Ansprüche 1 bis 9 zur Herstellung von Zement oder zementhaltigen Produkten.

11. Verfahren zur Reduktion von Cr(VI) in Zement oder zementhaltigen Produkten, **dadurch gekennzeichnet, dass** der Zement oder die zementhaltigen Produkte mit einer Zusammensetzung nach einem der Ansprüche 1 bis 9 derart gemischt werden, so dass in der Mischung die Konzentration an Fe(II)- und/oder Sn(II)- und/oder Sb(III)-Ionen mindestens 2x10⁻⁶% pro zu reduzierendem ppm Cr(VI) beträgt, bevorzugt mindestens 2x10⁻⁵% pro zu reduzierendem ppm Cr(VI), wobei sich die %-Angaben jeweils auf das Gewicht des Zementanteils beziehen.

12. Verfahren nach Anspruch 11, **dadurch gekennzeichnet, dass** die Beimischung der Zusammensetzung nach einem der Ansprüche 1 bis 9 vor, während und/oder nach dem Mahlen des Zements oder der zementhaltigen Produkte erfolgt.

13. Verwendung von Ascorbinsäure, Ascorbat, Hydroxypropandial und/oder einem reduzierenden Saccharid und/oder Derivaten davon als Reduktionsverstärker für Fe(II)-Verbindungen, Sb(III)-Verbindungen und/oder Sn(II)-Verbindungen, insbesondere Sn(II)-Verbindungen.

14. Verwendung nach Anspruch 13 bei der Reduktion von Cr(VI)-Ionen in Zement oder zementhaltigen Produkten.
